# EUROPEAN PATENT APPLICATION

(11) **EP 2 725 842 A2**
(43) Date of publication of application: **30.04.2014**
(21) Application number: 13185672.6
(22) Date of filing: 24.09.2013
(51) Int. Cl.: H04W 24/08, H04W 84/18

(54) **Apparatus and method for wireless mesh network communications**

(30) Priority: 05.10.2012 US 201213646173
(71) Applicant: General Electric Company, Schenectady, New York 12345 (US)
(72) Inventor: Stachow, Robert Paul, Minden, NV Nevada 89423 (US); Kavanaugh, Trevor Shaun, Minden, NV Nevada 89423 (US)
(74) Representative: Picker, Madeline Margaret

(57) **Abstract**

A portable apparatus (201) for use in a wireless mesh network (220) includes a radio (203) configured to transmit and receive signals to one or more network nodes coupled to a machine (204). The portable apparatus also includes a communication interface (135) coupled to the radio, the communication interface being configured to be coupled to a computing device comprising a processor (115) coupled to an input interface.

## Description

The embodiments described herein relate generally to wireless communications and, more particularly, to methods and apparatus for communicating with nodes in wireless mesh networks.

Many known communications networks are configured as wireless mesh networks (WMNs). At least some known WMNs include a plurality of radio nodes organized in a mesh topology. Moreover, at least some known WMNs are wireless broadband networks, sometimes referred to as Wi-Fi networks, that use the Institute of Electrical and Electronics Engineers (IEEE) standard 802.16^{™}. Some of such Wi-Fi networks may transmit large volumes of information in excess of 10 Megabits per second (Mbits/sec) and operate in frequency ranges in excess of 2.4 GigaHertz (GHz). Frequently, such Wi-Fi networks use omnidirectional antennas, directional antennas, or a combination thereof, and are known to have a relatively high rate of current consumption, e.g., in excess of 400 milliamperes (mA) per network device.

In addition, at least some known WMNs use either the ZigBee^{®} specification, the WirelessHART^{™} standard, or the ISA100.11a standard, as all are based on the IEEE standard 802.15.4^{™} for low-rate wireless networks. However, such low-rate wireless networks generally transmit only relatively small volumes of information, e.g., approximately 250 Kilobits per second (Kbits/sec) or less. Moreover, such low-rate wireless networks operate with frequencies of approximately 2.4 GigaHertz (GHz) or less. Also, such low-rate wireless networks have a relatively low rate of current consumption as compared to the Wi-Fi networks, e.g., less than 50 mA per device. Accordingly, low-rate wireless networks are generally less complex and cost-effective substitutes for more expensive Wi-Fi networks, and are generally used in industrial facilities where network traffic is typically limited to sensor information.

Known hazardous area certifications for wireless hardware may limit the communications, display, and user interaction capabilities of the wireless hardware. Additionally, individual nodes (e.g., wireless hardware) of known WMNs may be difficult to locate in large implementations. Accordingly, an apparatus and method for interacting with, retrieving information from, and locating wireless hardware in a wireless mesh network is needed in order to enhance the functionality of the wireless mesh network.

A portable apparatus for use in a wireless mesh network includes a radio configured to transmit and receive signals to one or more network nodes coupled to a machine. The portable apparatus also includes a communication interface coupled to the radio, the communication interface being configured to be coupled to a computing device comprising a processor coupled to an input interface.

In another aspect, a monitoring system is provided. The system includes a computing device and a wireless mesh network. The wireless mesh network includes at least one network node and a portable apparatus. The portable apparatus includes a radio configured to transmit and receive signals to the at least one network node and a communication interface coupled to the radio. The communication interface is configured to be coupled to the computing device.

In yet another aspect, a method of operating a network is provided. The method includes providing a portable apparatus for use in a wireless mesh network having one or more network nodes coupled to a machine component. The apparatus includes a radio configured to transmit signals to the one or more network nodes, a communication interface coupled to the radio, and a computer device coupled to the communication interface. The method also includes manipulating the computer device to cause the radio to transmit a locator signal to the one or more network nodes. The method also includes locating the one or more network nodes based on an audible or visual cue from the one or more network nodes triggered by the locator signal.

The embodiments described herein may be better understood by referring to the following description in conjunction with the accompanying drawings.
FIG. 1 is a block diagram of an exemplary computing device that may be used to monitor and/or control the operation of a machine and/or a network device.
FIG. 2 is block diagram of an exemplary monitoring system that includes a machine controller and a facility controller.
FIG. 3 is a schematic view of an exemplary network that may be used with the monitoring system shown in FIG. 2.
FIG. 4 is a schematic view of an exemplary network that may be used with the monitoring system shown in FIG. 2.
FIG. 5 is a flowchart of an exemplary method that may be used to operate the networks shown in FIGS. 2 and 3.

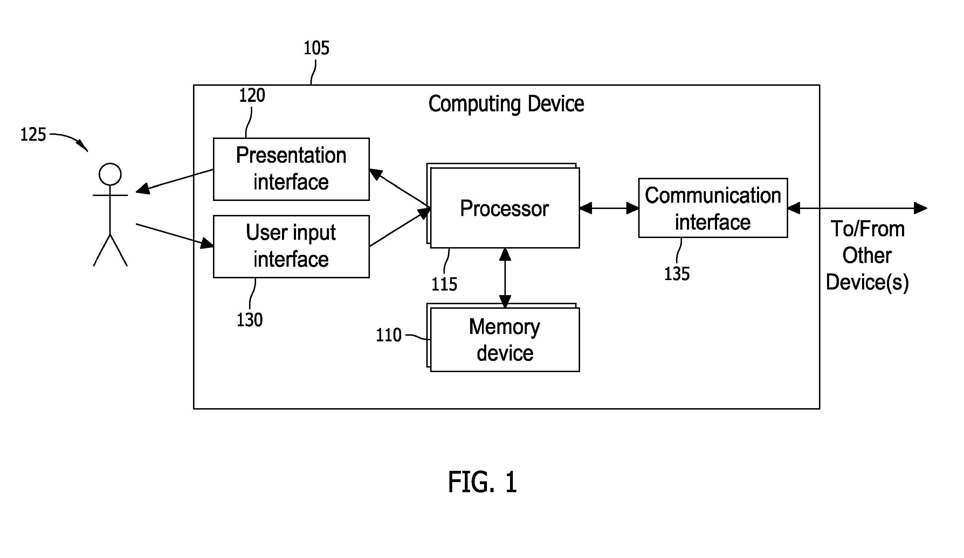

FIG. 1 is a block diagram of an exemplary computing device 105 that may be used to monitor and/or control the operation of a machine (not shown in FIG. 1). In some embodiments, computing device 105 is a data collection device. Computing device 105 includes a memory device 110 and a processor 115 operatively coupled to memory device 110 for executing instructions. In some embodiments, executable instructions are stored in memory device 110. Computing device 105 is configurable to perform one or more operations described herein by programming processor 115. For example, processor 115 may be programmed by encoding an operation as one or more executable instructions and providing the executable instructions in memory device 110. Processor 115 may include one or more processing units (e.g., in a multicore configuration).

In the exemplary embodiment, memory device 110 is one or more devices that enable storage and retrieval of information such as executable instructions and/or other data. Memory device 110 may include one or more computer readable media, such as, without limitation, random access memory (RAM), dynamic random access memory (DRAM), static random access memory (SRAM), a solid state disk, a hard disk, read-only memory (ROM), erasable programmable ROM (EPROM), electrically erasable programmable ROM (EEPROM), and/or non-volatile RAM (NVRAM) memory. The above memory types are exemplary only, and are thus not limiting as to the types of memory usable for storage of a computer program.

Further, as used herein, the terms "software" and "firmware" are interchangeable, and include any computer program stored in memory for execution by personal computers, workstations, clients and servers.

Memory device 110 may be configured to store operational measurements including, without limitation, vibration readings, field voltage and current readings, field reference setpoints, stator voltage and current readings, rotor speed readings, maintenance tasks, and/or any other type of data. In some embodiments, processor 115 removes or "purges" data from memory device 110 based on the age of the data. For example, processor 115 may overwrite previously recorded and stored data associated with a subsequent time and/or event. In addition, or alternatively, processor 115 may remove data that exceeds a predetermined time interval.

In some embodiments, computing device 105 includes a presentation interface 120 coupled to processor 115. Presentation interface 120 presents information, such as a user interface and/or an alarm, to a user 125. For example, presentation interface 120 may include a display adapter (not shown) that may be coupled to a display device (not shown), such as a cathode ray tube (CRT), a liquid crystal display (LCD), an organic LED (OLED) display, and/or an "electronic ink" display. In some embodiments, presentation interface 120 includes one or more display devices. In addition, or alternatively, presentation interface 120 may include an audio output device (not shown) (e.g., an audio adapter and/or a speaker) and/or a printer (not shown).

In some embodiments, computing device 105 includes a user input interface 130. In the exemplary embodiment, user input interface 130 is coupled to processor 115 and receives input from user 125. User input interface 130 may include, for example, a keyboard, a pointing device, a mouse, a stylus, a touch sensitive panel (e.g., a touch pad or a touch screen), a gyroscope, an accelerometer, a position detector, and/or an audio input interface (e.g., including a microphone). A single component, such as a touch screen, may function as both a display device of presentation interface 120 and user input interface 130.

A communication interface 135 is coupled to processor 115 and is configured to be coupled in communication with one or more other devices, such as a sensor or another computing device 105, and to perform input and output operations with respect to such devices. For example, communication interface 135 may include, without limitation, a wired network adapter, a wireless network adapter, a mobile telecommunications adapter, a serial communication adapter, and/or a parallel communication adapter. Communication interface 135 may receive data from and/or transmit data to one or more remote devices. For example, a communication interface 135 of one computing device 105 may transmit an alarm to the communication interface 135 of another computing device 105.

Presentation interface 120 and/or communication interface 135 are both capable of providing information suitable for use with the methods described herein (e.g., to user 125 or another device). Accordingly, presentation interface 120 and communication interface 135 may be referred to as output devices. Similarly, user input interface 130 and communication interface 135 are capable of receiving information suitable for use with the methods described herein and may be referred to as input devices.

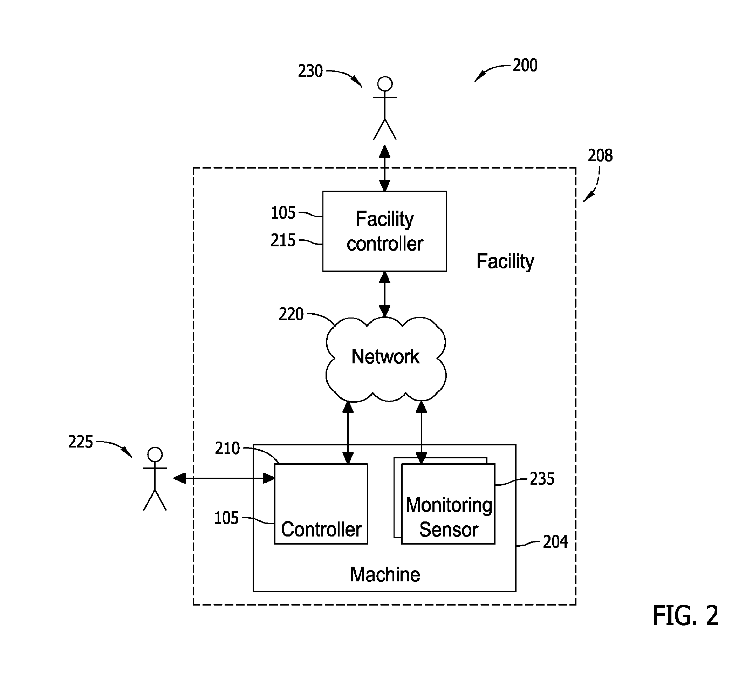

FIG. 2 is block diagram of an exemplary system 200 that may be used to monitor and/or operate a machine 204. In some embodiments, system 200 is a data acquisition system (DAS) and/or a supervisory control and data acquisition system (SCADA). Machine 204 may be any industrial equipment for any industrial process, including, without limitation, a chemical process reactor, a heat recovery steam generator, a steam turbine, a gas turbine, a compressor, a pump, an electric motor, a switchyard circuit breaker, and a switchyard transformer. In the exemplary embodiment, machine 204 is a portion of a larger, integrated industrial facility 208. Facility 208 may include, without limitation, multiple machines 204. Also, in the exemplary embodiment, system 200 includes a machine controller 210 and a facility controller 215 coupled together in communication via a network 220.

In the exemplary embodiment, network 220 is a radio mesh network, or more specifically, a low-rate wireless mesh network (WMN). Network 220 may use the ZigBee^{®} specification (ZigBee^{®} is a registered trademark of the ZigBee Alliance, San Ramon, California, U.S.A), the WirelessHART^{™} standard based on the Highway Addressable Remote Transducer (HART^{®}) protocol (WirelessHART^{™} is a trademark and HART^{®} is a registered trademark of the HART Communication Foundation, Austin, Texas, U.S.A.), ISA100.11a (ISA100 is a wireless system for automation developed by the International Society of Automation, Research Triangle Park, NC) and/or any other communications standard based on the Institute of Electrical and Electronics Engineers (IEEE) standard 802.15.4^{™} (IEEE standard 802.15.4^{™} is a trademark of the IEEE Standards Association, Piscataway, New Jersey, U.S.A). Alternatively, network 220 may use any mesh network standard, specification and/or protocol, e.g., IEEE standard 802.16^{™}, that enables system 200 to function as described herein.

Low-rate wireless network 220 transmits relatively small volumes of information, e.g., approximately, or less than, 250 Kilobits per second (Kbits/sec) and, e.g., at a frequency of approximately, or less than, 2.4 GHz. Embodiments of network 220 may include, without limitation, the Internet, a local area network (LAN), a wide area network (WAN), a wireless LAN (WLAN), and/or a virtual private network (VPN). While certain operations are described below with respect to particular computing devices 105, it is contemplated that any computing device 105 may perform one or more of the described operations. For example, controller 210 and controller 215 may perform all of the operations below.

Referring to FIGS. 1 and 2, in the exemplary embodiment, machine controller 210, and facility controller 215 are computing devices 105. Moreover, each computing device 105 is coupled to network 220 via communication interface 135. In an alternative embodiment, controller 210 is integrated with controller 215.

Controller 210 interacts with a first operator 225 (e.g., via user input interface 130 and/or presentation interface 120). For example, controller 210 may present information about machine 204, such as alarms, to operator 225. Facility controller 215 interacts with a second operator 230 (e.g., via user input interface 130 and/or presentation interface 120). For example, facility controller 215 may present alarms and/or maintenance tasks to second operator 230. As used herein, the term "operator" includes any person in any capacity associated with operating and maintaining facility 208, including, without limitation, shift operations personnel, maintenance technicians, and facility supervisors.

Machine 204 includes one or more monitoring sensors 235 in communication with network 220. In exemplary embodiments, monitoring sensors 235 collect operational measurements including, without limitation, vibration readings, field voltage and current readings, field reference setpoints, stator voltage and current readings, rotor speed readings, maintenance tasks, and/or any other type of data. Monitoring sensors 235 repeatedly (e.g., periodically, continuously, and/or upon request) transmit operational measurement readings at the current time. Additionally, monitoring sensors 235 may transmit a heartbeat signal to indicate an operational state (e.g., powered on, a fault condition, normal operating conditions, etc.). Such data is transmitted across network 220 and may be accessed by any device capable of accessing network 220 including, without limitation, desktop computers, laptop computers, and personal digital assistants (PDAs) (none shown). Transmissions may be selectively directed to any computing device 105 in communication with network 220, e.g., facility controller 215 or controller 210.

Facility 208 may include additional monitoring sensors (not shown) similar to monitoring sensors 235 that collect operational data measurements associated with the remainder of facility 208 including, without limitation, data from redundant machines 204 and facility environmental data, including, without limitation, local wind speed, local wind velocity, and local outside temperatures.

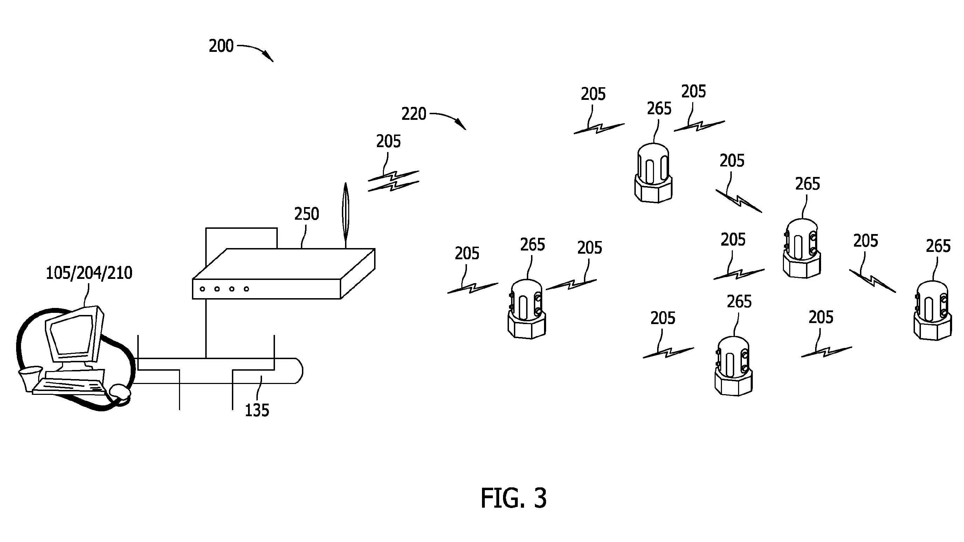

FIG. 3 is a schematic view of network 220. In the exemplary embodiment, network 220 includes a plurality of nodes 265 that are each individually addressable using a unique address. Each node 265 may function as a message originator, repeater, and/or message recipient. When performing the role of message originator, node 265 generates a data message that includes, without limitation, a destination address and a data payload. The destination address is a unique address of one or more predetermined nodes. The data payload may include sensor measurement data, heartbeat messages, network/sensor configuration messages, control commands, and/or any data message. Data messages are relayed using network 220 from a message originator to one or more message recipients via repeaters, if necessary, capable of routing data messages to the destination address of the data message. Network 220 includes a gateway device 250, wherein device 250 is any gateway device that enables communication within network 220 as described herein (i.e., is a node within network 220), including, without limitation, a router, a modem, a USB adapter, and a switch. In the exemplary embodiment, each computing device 105 is coupled to network 220 via communication interface 135 that is coupled to gateway device 250. Alternatively, computing device 105 may be coupled to network 220 via communication interface 135, wherein interface 135 is a node on network 220.

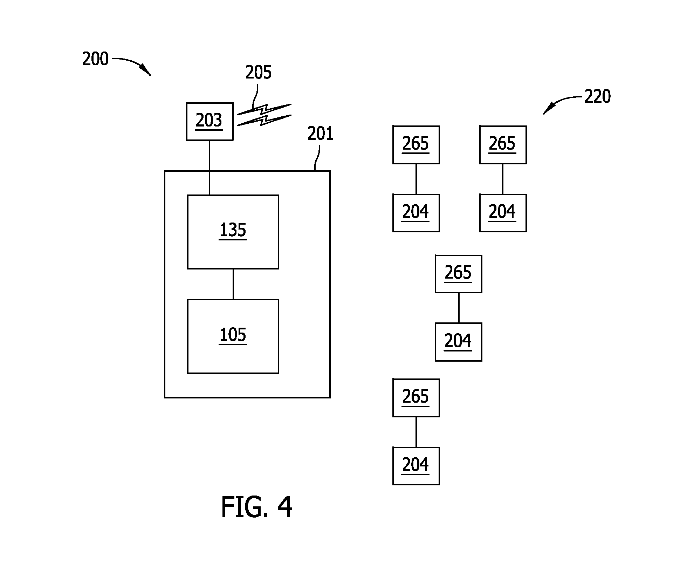

As shown in FIG. 4, according to an exemplary embodiment, portable gateway apparatus 201 for use in a wireless mesh network 220 is provided. The wireless mesh network 220 can have one or more nodes 265 coupled to machine 204 and/or a component of machine 204. The apparatus 201 can include a radio 203 configured to transmit and receive signals 205 to the one or more nodes 265 and a communication interface 135 coupled to said radio. The communication interface 135 is configured to be coupled to a computing device 105 having a processor 115 connected to an input interface 130. The communication interface 135 is configured to authenticate the signals 205 using an authentication scheme of the wireless mesh network 220. The computer device 105 can include a mobile telephone, a computer, a tablet device, or a handheld data collector. The computing device 105 includes a processor 115 coupled to the communication interface and a display (e.g., presentation interface 120 coupled to the processor 115. The display 120 is configured to display information corresponding to the signals 205 received from the one or more nodes 265. The input interface 130 is configured to receive operator 125 input that corresponds to the signals 205 for transmitting the input to the nodes 265. The computing device 105 is configured to enable performance of maintenance tasks on the one or more nodes 265. The computer device 105 is also configured to enable a data collection from the one or more nodes 265 or to enable a location identification of the one or more nodes 265. The computing device 105 can be configured to interact with the one or more nodes 265 using the wireless mesh network 220. The radio 203 can be incorporated within the computing device 105. The radio 203 can be compliant with the IEEE 802.15.4 standard of wireless communications. The communication interface 135 can include a universal serial bus (USB) port, a serial communication port, or a wireless communication interface.

According to an exemplary embodiment, a monitoring system 200 is provided, including a computing device 105 and a wireless mesh network 220. The wireless mesh network 220 includes at least one node 265 and a portable gateway apparatus 250. The portable gateway apparatus 250 includes a radio 203 configured to transmit and receive signals 205 to said at least one node 265 and a communication interface 135 coupled to said radio 203. The communication interface 135 is configured to be coupled to the computing device 105. The monitoring system 200 further includes at least one machine 204 having at least one component (not shown) such that at least one node 265 is coupled to the component. The communication interface 135 can be configured to authenticate the signals 205 using an authentication scheme of the wireless mesh network 220. The computer device 105 can include a mobile telephone, a computer, a tablet device, or a handheld data collector. The computing device 105 can enable the performance of maintenance tasks on a node 265. The computing device 105 can also enable data collection from a node 265 or location identification of a node 265. The computing device 105 can be configured to interact with a node 265 using the wireless mesh network 220. The radio 203 can be compliant the ISA100 standard of wireless communications.

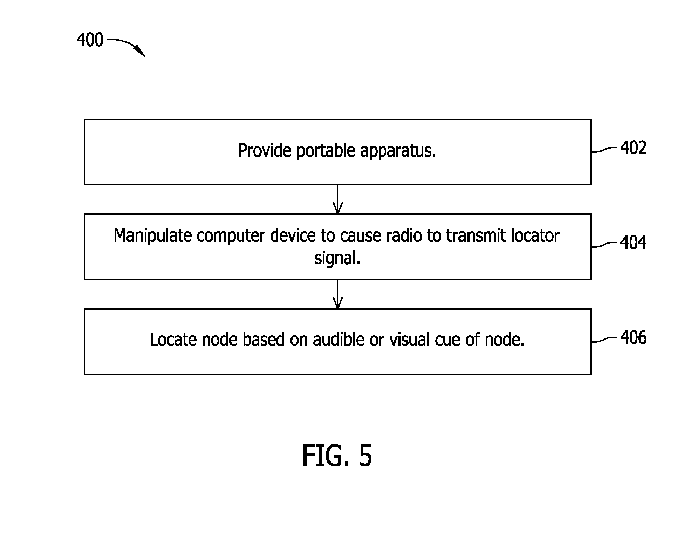

According to an exemplary embodiment, a method 400 of operating a network is shown in FIG. 5, including the act of providing 402 a portable gateway apparatus for use in a wireless mesh network having one or more nodes coupled to a machine component. The apparatus can include a radio configured to transmit signals to one or more nodes. The apparatus can also include a communication interface coupled to the radio and a computer device coupled to the communication interface. The method can include manipulating 404 the computer device to cause the radio to transmit a locator signal to one or more of the nodes. The method can also include locating 406 one or more of the nodes based on an audible or visual cue from the nodes triggered by the locator signal. The communication interface can be configured to authenticate the signals using an authentication scheme of the wireless mesh network. The computer device can include a mobile telephone, a computer, a tablet device, or a handheld data collector. The method can further include enabling, with the computer device, the performance of maintenance tasks on one or more of the nodes and data collection from one or more of the nodes.

In contrast to known wireless mesh networks, the methods, systems, and apparatus described herein facilitate improved transmission of data. Specifically, in contrast to known wireless mesh networks, the monitoring methods, systems, and apparatus described herein facilitate the communication and interaction of a computing device with nodes in a wireless mesh network without requiring the computing device to employ a gateway in order to access the nodes. The computing device, according to an exemplary embodiment, is able to communicate directly (e.g., with an attached communication interface) through the wireless mesh network with one or more of the nodes. More specifically, in contrast to known wireless mesh networks, the monitoring methods, systems, and apparatus described herein enable maintenance to be performed on equipment associated with a node without requiring the operator to access the node from a remote location. Furthermore, an exemplary embodiment enables an operator to collect data from a particular node by communicating directly with the node through a communication interface connected to a computing device. Even furthermore, an exemplary embodiment enables a user to locate a particular node, and the piece of equipment attached to that particular node, while roaming freely in a plant environment carrying only the computing device.

The methods and systems described herein provide an efficient and cost-effective means for enabling communication between nodes in a wireless mesh network and a computing device, without the use of an intermediary gateway. As compared to known wireless mesh networks, the network and nodes described herein enable improved communication efficiency.

An exemplary technical effect of the methods, systems, and apparatus described herein includes at least one of (a) providing a portable gateway apparatus for use in a wireless mesh network having one or more nodes coupled to a machine component; (b) manipulating the computer device to cause said radio to transmit a locator signal to the one or more nodes; and (c) locating the one or more nodes based on an audible or visual cue from the one or more nodes triggered by the locator signal.

Described herein are exemplary embodiments of wireless mesh networks and monitoring systems that facilitate enabling transmission and receipt of monitoring data of systems and/or facilities. Specifically, the wireless mesh networks and monitoring systems described herein employ the ISA100 communication protocol (and other protocols) to enable communication directly between a computing device and nodes in a wireless mesh network.

The methods and systems described herein are not limited to the specific embodiments described herein. For example, components of each system and/or steps of each method may be used and/or practiced independently and separately from other components and/or steps described herein. In addition, each component and/or step may also be used and/or practiced with other assemblies and methods.

Some embodiments involve the use of one or more electronic or computing devices. Such devices typically include a processor or controller, such as a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a computer readable medium, including, without limitation, a storage device and/or a memory device. Such instructions, when executed by a processor, cause the processor to perform at least a portion of the methods described herein. The above examples are exemplary only, and thus are not intended to limit in any way the definition and/or meaning of the term processor.

While the invention has been described in terms of various specific embodiments, those skilled in the art will recognize that the invention can be practiced with modification within the spirit and scope of the claims.

Various aspects and embodiments of the present invention are defined by the following numbered clauses:
1. A portable apparatus for use in a wireless mesh network, said apparatus comprising:
   a radio configured to transmit and receive signals to one or more network nodes coupled to a machine; and
   a communication interface coupled to said radio, said communication interface being configured to be coupled to a computing device comprising a processor coupled to an input interface.
2. A portable apparatus in accordance with clause 1, wherein said communication interface is configured to authenticate the signals using an authentication scheme associated with the wireless mesh network.
3. A portable apparatus in accordance with any preceding clause, wherein said computer device comprises at least one of a mobile telephone, a computer, a tablet device, and a handheld data collector.
4. A portable apparatus in accordance with any preceding clause, wherein said computing device comprises:
   a display coupled to said processor for displaying information corresponding to signals received from the one or more network nodes, said processor coupled to said communication interface; and
   said input interface configured to receive operator input corresponding to said signals for transmission to the one or more nodes.
5. A portable apparatus in accordance with any preceding clause, wherein said computing device is configured to initiate at least one of a performance of maintenance tasks on the one or more nodes, initiate a data collection from the one or more nodes, and identify a location of the one or more nodes.
6. A portable apparatus in accordance with any preceding clause, wherein said computing device is configured to interact with the one or more nodes using the wireless mesh network.
7. A portable apparatus in accordance with any preceding clause, wherein said radio is incorporated with said computing device.
8. A portable apparatus in accordance with any preceding clause, wherein said radio is in compliance with an IEEE 802.15.4 standard of wireless communications.
9. A portable apparatus in accordance with any preceding clause, wherein said communication interface comprises at least one of a universal serial bus (USB) port, a serial communication port, and a wireless communication interface.
10. A monitoring system comprising:
   a computing device; and
   a wireless mesh network comprising:
      at least one network node; and
      a portable apparatus comprising:
         a radio configured to transmit and receive signals to said at least one network node; and
         a communication interface coupled to said radio;
   wherein said communication interface is configured to be coupled to said computing device.
11. A monitoring system in accordance with any preceding clause, further comprising at least one machine comprising at least one component, wherein said at least one network node is coupled to said component.
12. A monitoring system in accordance with any preceding clause, wherein said communication interface is configured to authenticate said signals using an authentication scheme associated with the wireless mesh network.
13. A monitoring system in accordance with any preceding clause, wherein said computer device comprises at least one of a mobile telephone, a computer, a tablet device, and a handheld data collector.
14. A monitoring system in accordance with any preceding clause, wherein said computing device is configured to initiate at least one of a performance of maintenance tasks on said at least one network node, a data collection from said at least one network node, and an identification of a location of said at least one network node.
15. A monitoring system in accordance with any preceding clause, wherein said computing device is configured to interact with said at least one network node using the wireless mesh network.
16. A monitoring system in accordance with any preceding clause, wherein said radio is in compliance with an ISA100 standard of wireless communications.
17. A method of operating a network, said method comprising:
   providing a portable apparatus for use in a wireless mesh network having one or more network nodes coupled to a machine, said apparatus comprising:
      a radio configured to transmit signals to the one or more network nodes;
      a communication interface coupled to said radio; and
      a computer device coupled to said communication interface;
   manipulating the computer device to cause said radio to transmit a locator signal to the one or more network nodes; and
   locating the one or more network nodes based on an audible or visual cue from the one or more network nodes triggered by the locator signal.
18. A method in accordance with any preceding clause, wherein said communication interface is configured to authenticate said signals using an authentication scheme associated with the wireless mesh network.
19. A method in accordance with any preceding clause, wherein said computer device comprises at least one of a mobile telephone, a computer, a tablet device, and a handheld data collector.
20. A method in accordance with any preceding clause, further comprising initiating, with the computer device, at least one of a performance of maintenance tasks on said one or more network nodes and a data collection from said one or more nodes.

## Claims

1. A portable apparatus (201) for use in a wireless mesh network (220), said apparatus comprising:
a radio (203) configured to transmit and receive signals to one or more network nodes coupled to a machine (204); and
a communication interface (135) coupled to said radio, said communication interface being configured to be coupled to a computing device (105) comprising a processor (115) coupled to an input interface (130).

2. A portable apparatus in accordance with Claim 1 or Claim 2, wherein said communication interface is configured to authenticate the signals using an authentication scheme associated with the wireless mesh network.

3. A portable apparatus in accordance with Claim 1, 2 or 3, wherein said computer device comprises at least one of a mobile telephone, a computer, a tablet device, and a handheld data collector.

4. A portable apparatus in accordance with Claim 1, wherein said computing device comprises:
a display (120) coupled to said processor for displaying information corresponding to signals received from the one or more network nodes, said processor coupled to said communication interface; and
said input interface configured to receive operator input corresponding to said signals for transmission to the one or more nodes.

5. A portable apparatus in accordance with Claim 1, wherein said computing device is configured to initiate at least one of a performance of maintenance tasks on the one or more nodes, initiate a data collection from the one or more nodes, and identify a location of the one or more nodes.

6. A portable apparatus in accordance with any preceding Claim, wherein said computing device is configured to interact with the one or more nodes using the wireless mesh network.

7. A portable apparatus in accordance with any preceding Claim, wherein said radio is incorporated with said computing device.

8. A portable apparatus in accordance with any preceding Claim, wherein said radio is in compliance with an IEEE 802.15.4 standard of wireless communications.

9. A portable apparatus in accordance with any preceding Claim, wherein said communication interface comprises at least one of a universal serial bus (USB) port, a serial communication port, and a wireless communication interface.

10. A monitoring system (200) comprising:
a computing device (105); and
a wireless mesh network (220) comprising:
at least one network node (265); and
a portable apparatus (201) in accordance with any preceding Claim.

11. A monitoring system in accordance with Claim 10, further comprising at least one machine comprising at least one component, wherein said at least one network node is coupled to said component.

12. A method of operating a network, said method comprising:
providing a portable apparatus (201) for use in a wireless mesh network (220) having one or more network nodes coupled to a machine (204), said apparatus comprising:
a radio (203) configured to transmit signals to the one or more network nodes;
a communication interface (135) coupled to said radio; and
a computer device (105) coupled to said communication interface;
manipulating the computer device to cause said radio to transmit a locator signal to the one or more network nodes; and
locating the one or more network nodes based on an audible or visual cue from the one or more network nodes triggered by the locator signal.

13. A method in accordance with Claim 12, wherein said communication interface is configured to authenticate said signals using an authentication scheme associated with the wireless mesh network.

14. A method in accordance with Claim 12 or Claim 13, wherein said computer device comprises at least one of a mobile telephone, a computer, a tablet device, and a handheld data collector.

15. A method in accordance with Claim 12, 13 or 14, further comprising initiating, with the computer device, at least one of a performance of maintenance tasks on said one or more network nodes and a data collection from said one or more nodes.
